# EUROPEAN PATENT APPLICATION

(11) **EP 2 160 049 A1**
(43) Date of publication of application: **03.03.2010**
(21) Application number: 08425575.1
(22) Date of filing: 27.08.2008
(51) Int. Cl.: H04W 4/02, H04L 29/08

(54) **Method of subscribers of mobile terminals identification managed by a controller in A 2G/3G radio access network**

(71) Applicant: Nokia Siemens Networks S.p.A., 20060 Cassina de'Pecchi (MI) (IT); Nokia Siemens Networks Oy, 02610 Espoo (FI)
(72) Inventor: Bernasconi, Marco, 20092 Cinisello Balsamo (Milan) (IT); Magni, Paolo, 23891 Barzano (LC) (IT); Titone, Piercarlo, 20092 Cinisello Balsamo (Milan) (IT)
(74) Representative: Fischer, Michael

(57) **Abstract**

In a 3GPP UMTS and/or GSM network the subscriber identity IMSI and the MS/UE identity IMEI, in spite of being not required at the access network for speech and data calls, they can be nonetheless acquired by a controller either BSC or RNC which simulating the behaviour of the MSC sends an IDENTITY_REQUEST message to the MS/UE, differently from the current specifications where this message is sent only by the Core Network transparently to the BSC/RNC. At the reception of the IDENTITY_REQUEST the MS/UE increments the send sequence number N(SD) included in the IDENTITY_RESPONSE message and sends it to the requester with the requested IMSI/IMEI. The BSC/RNC, at the reception of the IDENTITY_RESPONSE message, transmits a neutral MM_NULL standard message to the Core Network. The latter, ignores the MM_NULL message but increments the value of N(SD) at the network side to avoid of discarding a subsequent message from the MS/UE. The procedure can be repeated for collecting the identities IMSI / IMEI of all MSs/UEs for localization aims and/or mobility management (fig.8).

## Description

### FIELD OF THE INVENTION

The present invention relates to the second and/or third generation Mobile Radio Networks, and more precisely to a method of subscribers or mobile terminals identification managed by a controller in a 2G/3G radio access network. The invention is particularly suitable to be implemented in the wireless networks embodied according to the 3GPP specifications for GSM and UMTS. (Used acronyms and bibliographic references are given at the end of the description).

### BACKGROUND ART

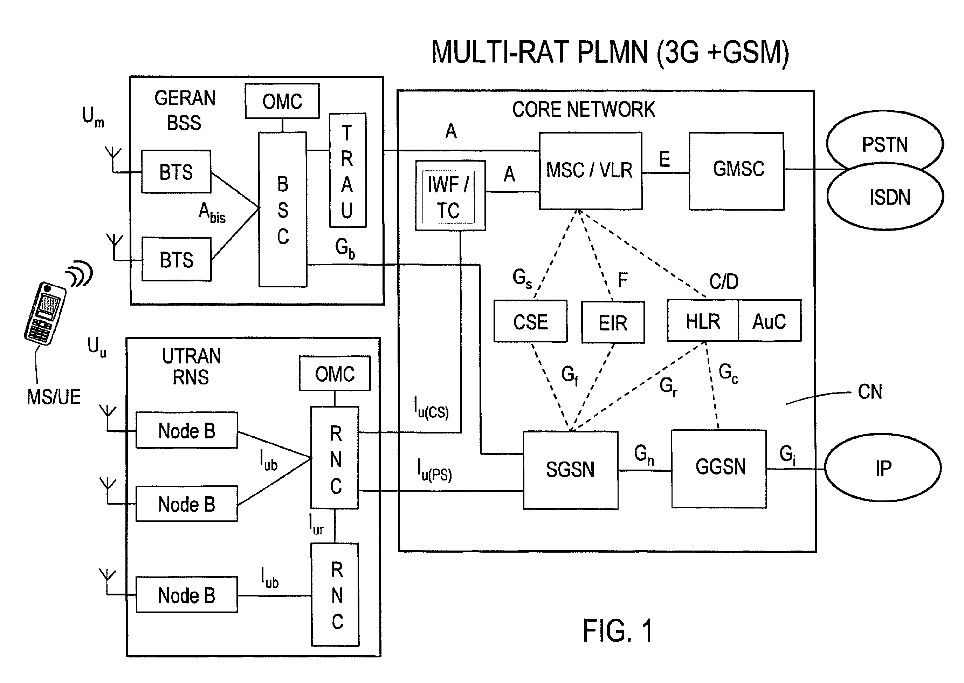

**Fig.1** shows a block diagram of a multi-RAT PLMN whose Core Network (CN), inclusive of GPRS, is shared between an UTRAN RNS and a GERAN BSS, the latter based on EDGE techniques for higher data rates, e.g. high-order digital modulations. Both the RNS and BSS are connected, on air, to a plurality of User Equipment UE/MS, each including a Mobile Equipment (ME) with a respective USIM card.

The UMTS part of fig.1 is described in the TS 23.002 (CN) and TS 25.401 (UTRAN). The RNS, described in TS 23.110, includes a plurality of NodeB, each connected to a respective RNC by means of an lub interface. Every Node B includes a BS connected to the UEs through an on-air Uu interface. The upper RNC n the figure is a Serving RNC (S-RNC), it is connected to the CN by means of a lu(CS) interface for Circuits Switched and a lu(PS) interface for Packet Switched. The S-RNC is also connected to an OMC. The RNC visible below can be a Drift RNC (D-RNC) connected to the S-RNC by means of an lur interface.

The BSS includes a plurality of BTSs connected to a BSC by means of an Abis Interface and to the UEs through an on-air Um interface. The BSC is interfaced to the Core Network by means of a Gb interface (packet switched) and is further connected to a TRAU also connected to the CN through an A interface. It is also connected to an OMC.

The CN network includes the following Network Elements: MSC, VLR, GMSC, IWF, TC, CSE, EIR, HLR, AuC, SGSN, and GGSN. The following interfaces are visible inside the CN block: A, E, Gs, F, C, D, Gf, Gr, Gc, Gn, and Gi. The IWF block translates the lu(CS) interface into the A interface towards MSC / VLR block. The TC element is connected to the S-RNC, through the lu(CS) interface, and to the MSC/VLR through the A interface; it performs the transcoding function for speech compression/expansion concerning UTRAN (differently from GSM where this function is performed outside the CN network). The GMSC is connected to the MSC/VLR through the E interface, and is also connected to a PSTN and ISDN blocks. Blocks CSE, EIR, HLR, AUC are connected to the MSC/VLR through, in order, the Gs, F, C, and D interfaces, and to the SGSN node through the Gf and Gr interfaces. The SGSN node is interfaced at one side to the S-RNC inside UTRAN block by means of the lu(PS) interface, and to the BSC inside the GSM-BSS block through the Gb interface. At the other side the SGSN node is interfaced to the GGSN node through the Gn interface. The last block is connected through the Gi interface to a packet data switching network of the IP type. The Core Network of fig.1 includes a CS part and a PS part (GPRS) and a CAMEL Application Part used between the MSC and CSE for Intelligent Network (IN) applications (CAP is described in TS 29.078).

In operation, the MSC, so as the SGSN node, keep records of the individual locations of the mobiles and performs the safety and access control functions. More BSS and RNS blocks are connected to the CN Network, which is able to perform intrasystem handovers between adjacent RNSs or between adjacent BSSs, and intersystem handovers between a RNS and an adjacent BSS (only concerning a multi-RAT mobile equipment). The UMTS in respect of GSM further improves data transmission service by greater throughputs and the asymmetrical traffic typical of the Internet Protocol (IP). The network of fig.1, which only represents a minimal part of a world-wide network, shall allow the routing of speech and data calls inside an International UMTS/GSM Service Area subdivided into National Service Areas. By way of the hierarchical structure of the network, each National Service Area is subdivided into the following nested domains of decreasing area: PLMN Service Area; MSC/SGSN Service Area; Location Area (CS-domain) uniquely defined by its LAI code; Routing Area inside the SGSN Service Area as a partition of the CS Location Area; Cell Area where the UE is actually located in the radio coverage of a target Node B or BTS. A noticeable number of protocols are described in the relevant standardization to govern the ordered exchange of information between the various interfaces.

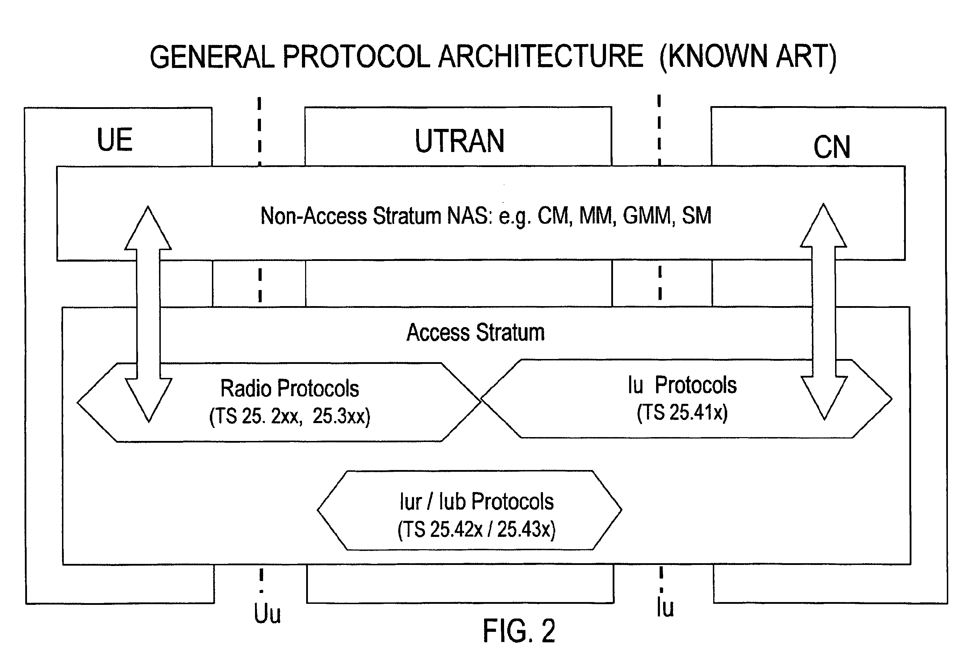

**Fig.2** shows diagrammatically the general architecture of the signalling protocols used in the UMTS network (a similar figure is valid also for the GSM network). With reference to **fig.2**, the protocol architecture is subdivided into UE, UTRAN and CN parts delimited by the Uu and lu interfaces (but also lur and lub). An Access Stratum (AS) with a superimposed Non-Access Stratum (NAS) are visible in the depicted architecture. The AS includes the lur / lub protocols defined in TS 25.42x / TS 25.43x series, the lu protocols defined in TS 25.41x series, and the Radio protocols defined in TS 25.2xx and 25.3xx series. User data and control information are exchanged between the CN and the UEs using the Radio protocols and the lu protocols of the Access Stratum. These protocols contain mechanisms for transfer NAS message transparently to RNC, i.e. the so-called Direct Transfer (DT) procedures. The NAS includes higher levels protocols to handle control aspects, such as: CM, MM, GMM, SM, and SMS, etc. More precisely, the NAS protocols are those between UE and the Core Network that are not terminated in the UTRAN.

### APPROACH TO THE TECHNICAL PROBLEM

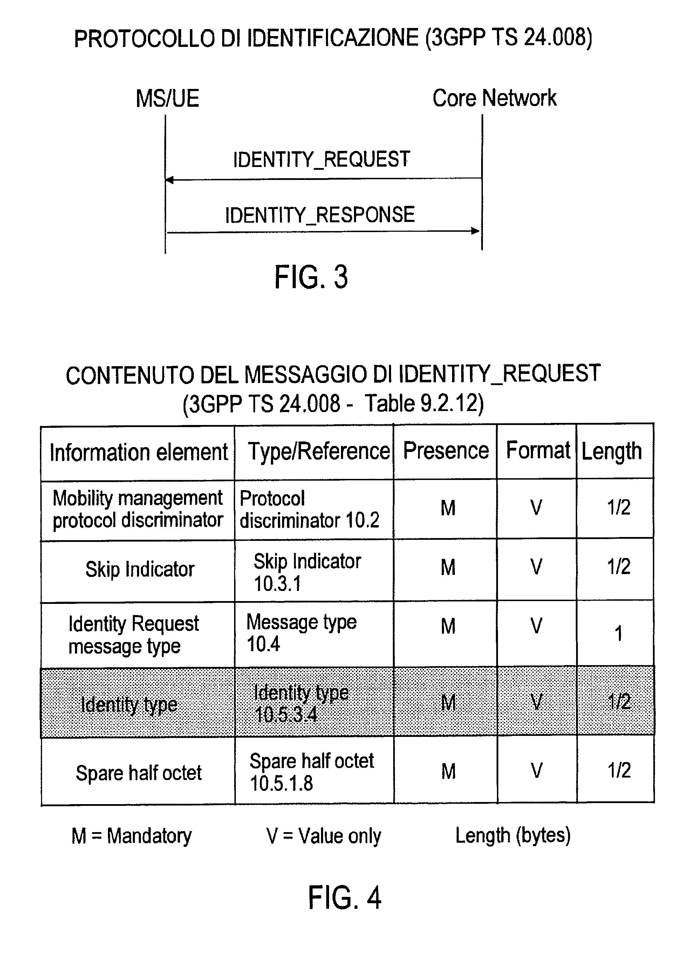

Recently, new RNC/BSC data collection functionalities related to localization and mobility have been requested in the 3GPP community. An example of data collection for localization purposes is the monitoring of the road traffic to detect possible queues of cars on the highways. An example of data collection for mobility purposes is that for managing the inter-controller handovers. Fundamental to these functionalities is the identification of the subscribers by the controller in concomitance with speech and/or data calls. Also fundamental is not to interfere with the normal procedure of subscriber identification by the Core Network as depicted in **fig.3** and defined in TS 24.008. With reference to **fig.3**, the CN starts the Subscriber/MS/UE identification protocol by sending DL an IDENTITY-REQUEST message to the MS/UE, which receives it and replies by sending an IDENTITY_RESPONSE message UL to the CN. The controller either RNC or BSC is not involved with the identification protocol, it only transfers these NAS level-3 messages transparently.

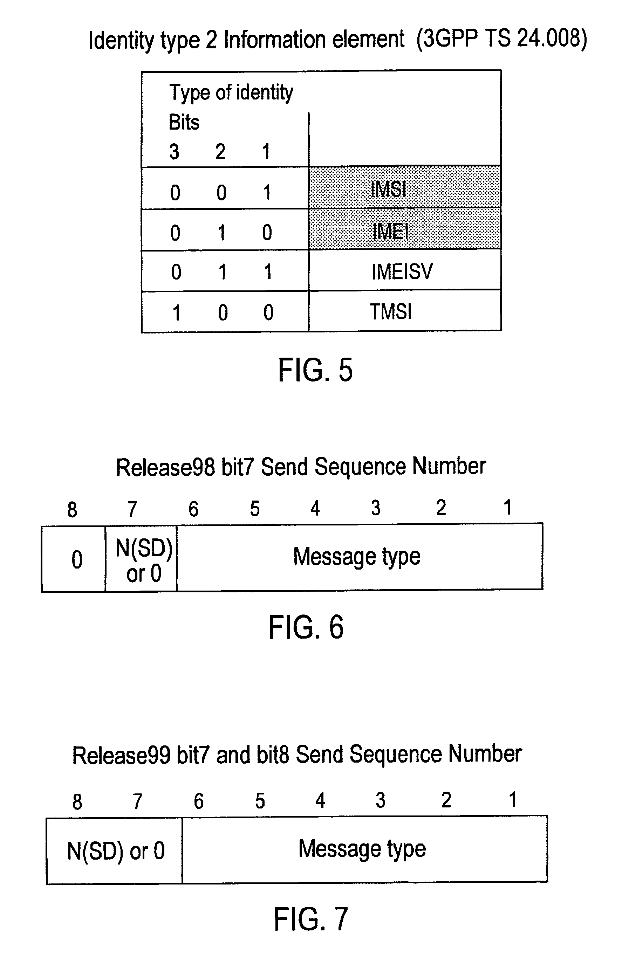

The content of the IDENTITY_REQUEST message is reported in **fig.4****,** corresponding to TS 24.008, Table 9.2.12. The content of the IDENTITY_RESPONSE message is reported in TS 24.008, Table 9.2.13. **Fig.5** reports the code of field "Identity type" of the IDENTITY_REQUEST message (fig.4). With reference to **fig.5** and TS 24.008 at clause 10.5.3.4, the CN can request which type of identity it needs. In our case either IMSI or IMEI can be requested by the network. The structure of the various types of identity is reported in TS 23.003.

**Fig.6** and **7** show the structure of the second octet of the Level-3 message IDENTITY_REQUEST (fig.4) for 3GPP Release98 and Release99, respectively.

With reference to **fig.6** (Release98 - corresponding to TS 24.007-700, Fig.11.10a: Message type IE (MM, CC, SS, GCC, BCC and LCS)), the depicted octet includes the Message type IE (bits 1 to 6), either a send sequence number N(SD) or 0 (bit 7), and a remaining bit fixed to 0 (bit 8). The Message type IE determines the function of a message within a protocol in a given direction. The meaning of the message type is therefore dependent on the protocol (the same value may have different meanings in different protocols), and the direction (the same value may have different meanings in the same protocol, when sent from the Mobile Station to the network and when sent from the network to the Mobile Station). Value N(SD) is discussed below.

With reference to **fig.7** (Release99 - corresponding to TS 24.007-700, Fig.11.10b: Message type IE (MM, CC and SS)), the depicted octet includes the Message type IE (bits 1 to 6), and the value N(SD) or 0 in the remaining two bits (bits 7 and 8).

According to 3GPP TS 24.007, at clause 11.2.3.2.3.1.1 the MS shall have one associated send state variable V(SD) ("Send Duplicated") for each upper layer message flow. The send state variable denotes the sequence number of the next in sequence numbered message in the flow to be transmitted. The value of the corresponding send state variable shall be incremented by one (either module-2 in fig.6 or module-4 in fig.7) with each numbered message transmission. According to clause 11.2.3.2.3.1.2, at the time when such a message to be numbered is designated for transmission, the value of N(SD) for the message to be transferred is set equal to the value of the send state variable V(SD).

As also reported in TS 3GPP 24.007 at clause 11.2.3.2.3: "*The network must be able to detect the duplicated received messages. Therefore, each concerned upper layer message must be marked with a send sequence number*. The CC, SS and MM share the same sequence number for historical reason as reported in 3GPP specification: *"For historical reasons, an exception is that messages sent with the CC, SS (via CS domain) and MM PDs share the same sequence numbering."*

### OUTLINED TECHNICAL PROBLEM

As argued from above, in current 3GPP specifications the User Identifier is not required at the controller for speech and data calls, but it is necessary with the introduction of new controller functionalities related to localization/mobility data collection. To remedy, an available solution is that the controller sniff the higher level protocol in order to acquire the User Identifier, either IMSI or IMEI, but this "old" procedure doesn't cover all possible scenarios; in particular it can't manage inter controller handovers. In other words if a MS/UE has established a CS call and performs an inter-controller handover in the target cell, it is not possible for the target controller to acquire the IMSI / IMEI sniffing the higher layer protocol messages. In fact, the Handover_Request (2G - 3GPP TS 48.008) and Relocation_Request (3G - 3GPP TS 25.413) messages don't contain the IMEI information element; the IMSI information element is optional but normally not filled by the Core Network. For this reason localization/mobility data collection can't be applied in target Controller Besides, old phase-one MSs don't provide their IMEISV value at all (from which IMEI can be extracted), even if the Core Network usually requests it with the Ciphering Mode Command message (see 3GPP TS 44.018 clause. 9.1.10: "Ciphering mode complete"). For this reason these legacy MSs are completely excluded from localization/mobility data collection services.
Furthermore, any attempt to remedy the situation shall take in due account the constraint with the send sequence number N(SD).

### OBJECT AND SUMMARY OF THE INVENTION

In view of the constraints of the state of the art described, it is an object of the present invention to provide the identity of either subscriber s or mobile stations to the controllers belonging to a radio access network of a cellular telephony system, even for speech and data calls, without needing of sniffing the higher layer protocol messages by the controller, and preserving the send sequence numbering mechanism.

The invention achieves said object by a method of identification of either subscribers or mobile stations active in the area covered by a mobile radio network including network elements exchanging signalling messages at the respective interfaces, being one of these messages at disposal of the Core Network to request the identity of either a subscriber or a mobile station, transparently to the access network, and the reception element of said message being configured to reply, transparently to the access network, by sending the requested identity to the Core Network together with the actual value of a variable incremented at each sent message, and the Core Network at the reception of the reply compares successive values of said variable in order to discard possible duplicated messages, wherein a controller belonging to the access network in order to collect data aimed to localize the sender or for mobility management performs the steps of:
a) sending said identity request message towards a mobile station;
b) receiving the requested identity with the response message from said mobile station and storing it;
c) sending a neutral message to the Core Network;
and the Core Network performs the following steps:
d) receiving said neutral message and ignoring it;
e) incrementing of one the value of said variable to avoid of discarding a subsequent message received from the same mobile station, as disclosed in claim 1.

Additional features of the present invention which are believed to be novel are set forth with particularity in the appended claims.

According to the invention, said mobile station is involved with a voice or data call.

According to the invention, steps a) to e) are cyclically repeated for acquiring the identities of all subscribers or mobile stations involved with speech or data calls into a specific cell or adjacent cells controlled by the same controller. The received identities are collected by the controller for further analysis aimed to localization or mobility management.

According to the invention implemented with 3GPP Release98 mobile stations, said variable is incremented by one module-2 by the mobile station, and the Core Network detects if two subsequent reply messages in the same flow have identical value of said variable, for discarding the second message in case of concordance.

According to the invention implemented with 3GPP Release99 and later mobile stations, said variable is incremented by one module-4 by the mobile station, and the Core Network detects in the incoming message if said variable has been incremented by one from the last accepted message, for discarding the incoming message if this condition is not met.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **fig.1** shows a schematization of a cellular telephony system based on both UMTS and GSM technologies;
- **fig.2** shows the general architecture of the signalling protocols implemented by the system of fig.1;
- **fig.3** shows the message time diagram of the Subscriber/MS/UE Identification protocol managed by the Core Network according to the current 3GPP specifications;
- **fig.4** reports the content of the IDENTITY_REQUEST message sent by the Core Network to start the Identification protocol;
- **fig.5** reports the types of identity that is possible to request with the IDENTITY_REQUEST message;
- **fig.6** and **fig.7** show the structure of the second octet of the IDENTITY_REQUEST message for 3GPP Release98 and Release99, respectively;
- **fig.8** shows the message time diagram of the Subscriber/MS/UE Identification protocol managed by a controller inside the access network, according to the method of the present invention.

### DETAILED DESCRIPTION OF AN EMBODIMENT OF THE INVENTION

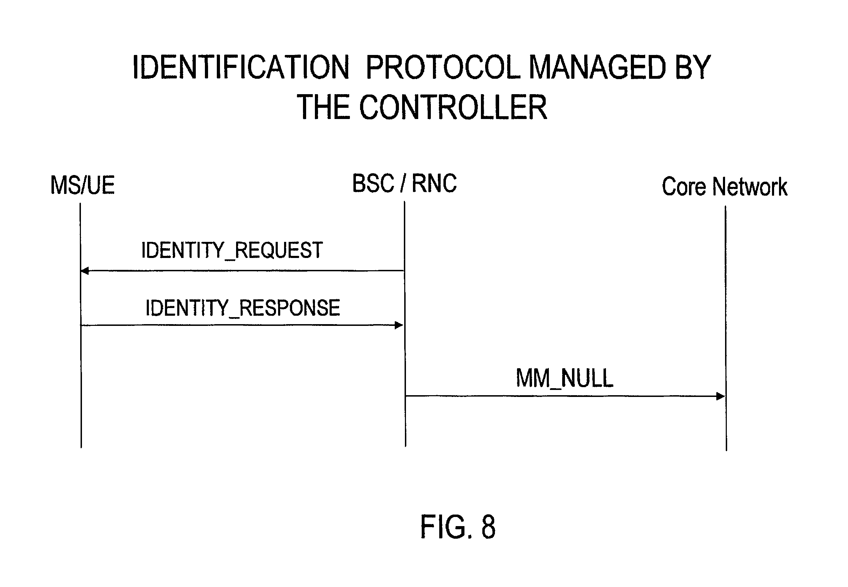

With reference to **fig.8**, a new subscriber identification protocol has been developed tp operate between the following network elements: a controller of the Base Stations which belongs to the Access Network (either BSC or RNC); a mobile station (either MS or UE); and the Core network. Differently from the standard procedure, the BSC/RNC is now the network element which starts the identification protocol of the user or MS/UE by sending an IDENTITY_REQUEST message to the MS/UE. Since the BSC/RNC simulates the behaviour of the Core network (MSC), the IDENTITY_REQUEST message is the one depicted in **fig.4****.** The MS/UE receives this message to which answers with the waited (for the Access Stratum) IDENTITY_RESPONSE message, incrementing the V(SD) variable by one. At the reception of the IDENTITY_RESPONSE the BSC/RNC forwards the standard message MM_NULL to the Core Network.

As reported in TS 24.007 at clause 11.2.3.2.3.2.2, the core network shall compare the send sequence numbers N(SD) of pairs of subsequent messages in the same upper layer messages flow and for the MM+CC+SS (via CS domain) upper layer message flow, textually:
- *when accessed by a release 98 or earlier mobile station, in case the send sequence numbers of two subsequent messages in the flow are identical, the core network shall discard the second one of the received messages;*
- *when accessed by a release 99 or later mobile station, the core network shall discard any message whose N(SD) is not the increment by one (modulo 4) of the N(SD) of the last accepted message.*

When the MSC receives the MM_NULL message the N(SD) is incremented on the CN side avoiding subsequent discarding. The MM_NULL message has been introduced by the CRA0143 in 1996 and is defined in 3GPP 24.008 at clause 9.2.19, textually: *"This message is sent in mobile to network direction. This message is not used on the radio interface. When received by the network it shall be ignored*". No side effect (apart from updating N(SD) counter in the MSC) is expected if the controller sends the MM_NULL message toward the Core Network.

The identification protocol of **fig.8** can be cyclically repeated for acquiring the identities of all MSs/UEs involved with speech or data calls into a specific cell or adjacent cells controlled by the same BSC/RNC. The received identities can be collected by the BSC/RNC for further analysis aimed to localization or mobility management. For example, associating the identities IMSI/IMEI to the values of Timing Advance of the corresponding mobile stations MS/UE, it is possible calculate the distances from the sectorial antenna of the serving cell (BTS / NodeB). In case an "intelligent" directional array is used to track the azimuthal position of the MSs/UEs, the localization data can be ranked for distances and angular positions, in such a way a traffic road congestion can be detected. In order to detect the traffic congestion along a highway (where the angular position of the mobile can be approximately neglected), a method executed by the BSC/RNC is the following:
- ranking the calculated distances;
- subtracting each distance from the nearest ones in the rank and comparing the differences in module to a given proximity threshold;
- monitoring each distance during a given time window, calculating the speed of the mobile station and comparing the speed to a given speed threshold;
- calculating how many times said differences are falling below the proximity threshold and divide by the number of compared distances;
- calculating how many times said speeds are falling below the speed threshold and divide by the number of compared speeds;
- detecting a traffic congestion if the average of the result of the two divisions is greater than a given numerical fraction lower than one (e.g. one fourth).

Furthermore, a BSC/RNC targeted for inter-controller handover or relocation of resources from a "serving" controller, can request in its turn the identity of the incoming MS/UE, overcoming with that the inherent limitation of the Handover_Request and Relocation_Request messages.

Although the invention has been described with particular reference to a preferred embodiment, it will be evident to those skilled in the art, that the present invention is not limited thereto, but further variations and modifications may be applied without departing from the scope of the invention as defined by the annexed claims.

### USED ACRONYMS

- 3GPP: 3^{rd} Generation Partnership Program
- AuC: Authentication Centre
- AS: Access Stratum
- BCC: BTS Colour Code
- BS: Base Station
- BSC: Base Station Controller
- BSS: Base Station Subsystem
- BTS: Base Transceiver Station
- CAMEL: Customised Application for Mobile network Enhanced Logic
- CAP: CAMEL Application Part
- CC: Call Control
- CM: Connection Management
- CN: Core Network
- CR: Change Request
- CS: Circuit Switched
- CSE: Camel Service Environment
- DL: Downlink
- EDGE: Enhanced Data rates for GSM Evolution
- EIR: Equipment Identity Register
- E-NodeB: Enhanced NodeB
- PD: Packet Data
- PD: Protocol Discriminator
- PDG: Packet Data Gateway
- PDU: Protocol Data Unit
- EGPRS: Enhanced GPRS
- GCC: Group Call Control
- GERAN: GSM EDGE RAN
- GGSN: Gateway GPRS Support Node
- GMM: GPRS Mobility Management
- GMSC: Gateway MSC
- GPRS: General Packet Radio Service
- GSM: Global System for Mobile communications
- HLR: Home Location Register
- HSS: Home Subscriber Server
- IE: Information Element
- IMEI: International Mobile Equipment Identity
- IMEISV: IMEI Software Version
- IMSI: International Mobile Subscriber Identity
- IP: Internet Protocol
- ISDN: Integrated Services Digital Network
- IWF: Interworking Function
- LAI: Location Area Identity
- LCS: Location Services
- MM: Mobility Management
- MME: Mobility Management Entity
- MRRM: Multi-Radio Resource Management
- MS: Mobile Station
- MSC: Mobile Switching Centre
- NAS: Non Access Stratum
- NSN: Nokia Siemens Networks
- OMC: Operation and Maintenance Centre
- PD: Protocol Discriminator
- PLMN: Public Land Mobile Network
- PS: Packet Switched
- PSTN: Public Switched Telephone Network
- RA: Routing Area
- RAN: Radio Access Network
- RAT: Radio Access Technology
- RNC: Radio Network Controller
- RNS: Radio Network Subsystem
- RRM: Radio Resource Management
- SIM: Subscriber Identity Module
- SM: Session Management
- SS: Supplementary Service
- SGSN: Serving GPRS Support Node
- SMS: Short Message Service
- TC: Transcoder
- TMSI: Temporary Mobile Subscriber Identity
- TRAU: Transcoder and Rate Adaptor Unit
- TS: Technical Specification
- UE: User Equipment
- UL: Uplink
- UMTS: Universal Mobile Telecommunication System
- USIM: UMTS Subscriber Identity Module
- UTRAN: Universal Terrestrial Radio Access Network
- VLR: Visitor Location Register

### REFERENCES

[1] 3GPP TS 23.003-810: "Core Network and Terminals; Numbering, addressing and identification".
[2] 3GPP TS 24.007-700: "Core Network; Mobile radio interface signalling layer 3; General aspects".
[3] 3GPP TS 24.008-820: "Mobile Radio Interface Layer 3 specification; Core Network Protocols; Stage 3".
[4] 3GPP TS 25.413-790: "UTRAN lu interface RANAP signaling".
[5] 3GPP TS 44.018-830: "Mobile radio interface layer 3 specification; Radio Resource Control (RRC) protocol".
[6] 3GPP TS 48.008-830: "Mobile Switching Centre - Base Station System (MSC-BSS) interface; Layer 3 specification".

## Claims

1. Method of identification of either subscribers or mobile stations (MS/UE) active in the area covered by a mobile radio network including network elements (MSC, SGSN, BSC, RNC, BTS, NodeB, MS/UE) exchanging signalling messages at the respective interfaces (A, Gb, lu, lub, lur, Abis, Um, Uu), being one of these messages (IDENTITY_REQUEST) at disposal of the Core Network to request the identity of either a subscriber or a mobile station, transparently to the access network (BSS, RNS), and the reception element (MS/UE) of said message being configured to reply, transparently to the access network, by sending the requested identity (IMSI, IMEI) to the Core Network together with the actual value of a variable (N(SD)) incremented at each sent message, and the Core Network at the reception of the reply message (IDENTITY_RESPONSE) compares successive values of said variable (N(SD)) in order to discard possible duplicated messages,
**characterized in that** a controller (BSC, RNC) belonging to the access network in order to collect data aimed to localize the sender or for mobility management performs the steps of:
a) sending said identity request message (IDENTITY_REQUEST) towards a mobile station (MS/UE);
b) receiving the requested identity (IMSI, IMEI) with the response message (IDENTITY_RESPONSE) from said mobile station (MS/UE) and storing it;
c) sending a neutral message (MM_NULL) to the Core Network;
and the Core Network performs the following steps:
d) receiving said neutral message (MM_NULL) and ignoring it;
e) incrementing of one the value of said variable (N(SD)) to avoid of discarding a subsequent message received from the same mobile station (MS/UE).

2. The method of claim 1, **characterized in that** steps a) to e) are cyclically repeated by the controller (BSC, RNC) and the Core network for acquiring and collecting the identities (IMSI, IMEI) of all subscribers and/or mobile stations (MS/UE) involved with speech or data calls into a specific cell or adjacent cells controlled by the same controller (BSC, RNC).

3. The method of claim 1 or 2, **characterized in that** the mobile station (MS/UE) increments by one module-2 said variable (N(SD)) included in the response messages (IDENTITY_RESPONSE) and the Core Network detects if two subsequent response messages (IDENTITY_RESPONSE) in the same flow have identical value of said variable, for discarding the second message in case of concordance.

4. The method of claim 1 or 2, **characterized in that** the mobile station (MS/UE) increments by one module-4 said variable (N(SD)) included in the response messages (IDENTITY_RESPONSE) and the Core Network detects in the incoming response message if said variable has been incremented by one from the last accepted response message, for discarding the incoming message if this condition is not met.

5. The method of claim 1, **characterized in that** said mobile station is involved with a voice or data call.

6. The method of claim 2, **characterized in that** said controller (BSC, RNC) associates the collected identities (IMSI/IMEI) to the values of timing advance relevant to the corresponding mobile stations (MS/UE) and calculates the distances of the mobile stations from the antenna of the serving base station (BTS, NodeB).

7. The method of claim 6, **characterized in that** said controller (BSC, RNC) to detect the traffic congestion along a highway executes the steps of:
- ranking said calculated distances;
- subtracting each distance from the nearest ones in the rank and comparing the differences in module to a given proximity threshold;
- monitoring each distance during a given time window, calculating the speed of the mobile station and comparing the speed to a given speed threshold;
- calculating how many times said differences are falling below the proximity threshold and divide by the number of compared distances;
- calculating how many times said speeds are falling below the speed threshold and divide by the number of compared speeds;
- detecting a traffic congestion if the average of the result of the two divisions is greater than a given numerical fraction lower than one.

8. The method of claim 2, **characterized in that** said controller is the one targeted for inter-controller handover or for relocation of resources.
